(19) Europäisches Patentamt / European Patent Office / Office européen des brevets

(11) **EP 4 416 835 B1**

(12) **FASCICULE DE BREVET EUROPEEN**

(45) Date de publication et mention de la délivrance du brevet:
**17.09.2025  Bulletin 2025/38**

(21) Numéro de dépôt: **22801484.1**

(22) Date de dépôt: **13.10.2022**

(51) Classification Internationale des Brevets (IPC):
*H02P 21/18* (2016.01)    *G01P 3/48* (2006.01)

(52) Classification Coopérative des Brevets (CPC):
**G01P 3/48; H02P 21/18**

(86) Numéro de dépôt international:
**PCT/EP2022/078589**

(87) Numéro de publication internationale:
**WO 2023/062167 (20.04.2023 Gazette 2023/16)**

(54) **PROCÉDÉ D'ESTIMATION DE LA POSITION ET DE LA VITESSE DU ROTOR D'UNE MACHINE ÉLECTRIQUE SYNCHRONE À AIMANT PERMANENT**

VERFAHREN ZUR SCHÄTZUNG DER POSITION UND GESCHWINDIGKEIT DES ROTORS EINES PERMANENTMAGNET-SYNCHRONMOTORS

METHOD FOR ESTIMATING THE POSITION AND SPEED OF THE ROTOR OF A PERMANENT-MAGNET SYNCHRONOUS ELECTRIC MOTOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **13.10.2021  FR 2110847**

(43) Date de publication de la demande:
**21.08.2024  Bulletin 2024/34**

(73) Titulaire: **Ampere SAS**
**92100 Boulogne-Billancourt (FR)**

(72) Inventeurs:
• **GHANES, Malek**
  **44300 Nantes (FR)**

• **HAMIDA, Mohamed**
  **44300 Nantes (FR)**
• **MALOUM, Abdelmalek**
  **91550 Paray-Vieille-Poste (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**FR-A1- 3 028 362      US-A1- 2017 126 153**
**US-A1- 2018 131 305**

**Description**

L'invention concerne le domaine des machines électriques synchrones à aimant permanent.

Plus particulièrement l'invention concerne un procédé d'estimation de la position et de la vitesse du rotor d'une machine électrique synchrone à rotor à aimant permanent.

Pour des raisons écologiques et de coûts, les machines électriques prennent de plus en plus de la place dans les systèmes de propulsion des véhicules électriques. La machine synchrone à aimant permanent est une machine particulièrement commune dans les véhicules automobile électriques.

Toutefois, il est connu que tous les types de commandes en boucle fermée de ce type de machine synchrone nécessitent une connaissance précise de la vitesse de rotation et la position du rotor.

Cette information peut classiquement être obtenue directement par un capteur de position placé sur le bout d'arbre de la machine.

Cependant, la présence de cet élément dans le système de contrôle présente plusieurs inconvénients tels que le volume et le coût global du système. Il est donc préférable de remplacer le capteur matériel par un capteur logiciel qui peut donner l'information sur la vitesse de rotation et la position du rotor en se basant sur d'autres capteurs existants déjà dans le système de contrôle.

De nombreuses solutions sont proposées aujourd'hui dans l'art antérieur pour répondre à ce besoin, comme par exemple dans le document US 2018/131305 A1.

Ces solutions peuvent être regroupées dans deux principales catégories :

- les techniques basées sur le modèle de la machine ; et
- les techniques sans modèle de la machine.

La première catégorie utilise des observateurs qui sont capables de reconstruire des grandeurs non mesurées.

Ces techniques souffrent de plusieurs problèmes. En particulier les modèles proposés ne sont pas toujours observables notamment à faible vitesse et de plus les variations des paramètres de la machine affectent beaucoup l'estimation.

Pour faire face à ces problèmes, une deuxième catégorie dite sans modèle est proposée. Ces techniques utilisent l'injection des signaux (tension et/ou courant) à haute fréquence pour estimer la vitesse et la position après des étapes de traitement du signal.

Malgré leurs performances à faible vitesse, les techniques sans modèle continuent à souffrir de la variation de quelques paramètres. De plus, l'injection des signaux demande l'intégration d'un dispositif complémentaire, ce qui augmente le coût d'implémentation.

Ainsi, il existe le besoin d'un procédé d'estimation de la position et de la vitesse des machines synchrones permettant de résoudre les problèmes évoqués précédemment.

A cet effet on propose un procédé d'estimation de la position et de la vitesse du rotor d'une machine électrique synchrone à rotor à aimant permanent comprenant :

- Une étape de mesure des courants triphasés de ladite machine électrique ;
- Une étape de transformation desdits courants triphasés mesurés dans un repère tournant diphasé, comprenant une composante directe et une composante en quadrature ;
- Une étape de définition de deux variables intermédiaires de l'erreur d'estimation de la position du rotor en fonction des valeurs du courant transformé dans ledit repère diphasé ;
- Une étape de définition d'un observateur pour déterminer ladite position et vitesse du rotor en fonction des deux variables intermédiaires de l'erreur d'estimation et de la valeur des courants transformés, et du signe de la composante en quadrature du courant diphasé.

Ainsi, on peut obtenir un procédé d'estimation, permettant d'une part de réduire le coût d'implémentation lié à l'utilisation des dispositifs d'injection des signaux à haute fréquence. Ce procédé permet en outre d'estimer la position et/ou la vitesse par un seul procédé indépendamment de tous les paramètres de la machine.

Ce procédé permet d'éviter les problèmes d'observabilité liés aux modèles des machines.

Enfin ce procédé permet en outre d'éviter les retards dus à l'utilisation des filtres des méthodes d'injection haute fréquence pour extraire l'erreur d'estimation de la position.

En particulier, ladite étape de transformation met en œuvre une transformée de Park, qui est une transformée performante pour ce type de changement de repère. L'invention n'est toutefois pas limitée à cette transformée précise.

En particulier, ledit observateur est un observateur à mode glissant. Ce qui permet de réaliser une estimation fiable et robuste.

En particulier ledit observateur permet en outre une estimation de l'accélération de la machine électrique. Ceci permet notamment de diminuer les écarts d'estimation dans les phases transitoires

En particulier, l'observateur calcule la position et la vitesse du rotor en fonction de la première ou de la deuxième variable intermédiaire, sélectionnée en fonction du signe de la composante en quadrature du courant diphasé. Ainsi, on peut aisément et avec peu de calculs mettre en œuvre les variables intermédiaires dans l'observateur

L'invention concerne aussi un dispositif d'estimation de la position et de la vitesse du rotor d'une machine électrique synchrone à rotor à aimant permanent comprenant :

- Des moyens de mesure des courants triphasés de ladite machine électrique ;
- Des moyens de transformation desdits courants triphasés mesurés dans un repère tournant diphasé, comprenant une composante directe et une composante en quadrature ;
- Des moyens de définition de deux variables intermédiaires de l'erreur d'estimation de la position du rotor en fonction des valeurs du courant transformé dans ledit repère diphasé ;
- Des moyens de définition d'un observateur pour déterminer ladite position et vitesse du rotor en fonction des deux variables intermédiaires de l'erreur d'estimation et de la valeur des courants transformés, et du signe de la composante en quadrature du courant diphasé.

En particulier tous les moyens de ce dispositif peuvent être constitués par un calculateur, notamment un calculateur embarqué dans un véhicule automobile, mais de manière équivalente un processeur, un DSP, un circuit logique programmable du type FPGA, ou tout autre organe de calcul numérique. Les différents moyens du dispositif peuvent être regroupés dans un même calculateur ou séparés dans différents calculateurs en fonction des contraintes techniques d'intégration du dispositif.

L'invention concerne aussi un ensemble électrique comprenant une machine électrique synchrone à rotor à aimant permanent et un dispositif d'estimation tel que décrit précédemment.

L'invention concerne aussi un véhicule automobile comprenant un ensemble électrique tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la figure 1 est un organigramme d'un procédé selon le mode principal de l'invention ;
- la figure 2 représente les profils de vitesse et de couple de charge mis en œuvre dans le cadre de l'expérimentation du procédé selon l'invention ;
- la figure 3 est une représentation des paramètres dynamiques mis en œuvre dans le cadre de l'expérimentation du procédé selon l'invention ;
- la figure 4 est une représentation des vitesses estimée et mesurée (partie haute) et l'erreur d'estimation de la vitesse (partie basse) ;
- la figure 5 est une représentation des positions estimées et mesurées (partie haute) et l'erreur d'estimation de la position (partie basse) ; et
- la figure 6 est une représentation de la même expérience réalisée à partir d'une méthode basée sur l'injection de signaux haute fréquence.

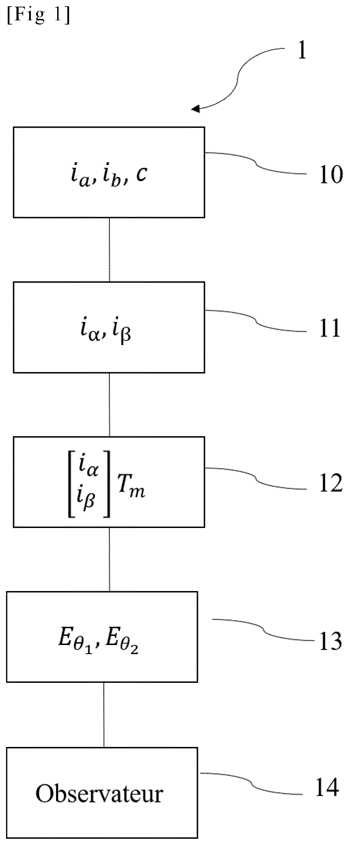

En référence à la figure 1, l'invention propose un procédé 1 d'estimation de la vitesse et de la position du rotor d'une machine électrique synchrone à aimant permanent comprenant tout d'abord une étape de mesure 10 des courants triphasés de la machine électrique $i_a$, $i_b$, $i_c$.

Il est entendu dans le cadre de la présente invention que la position du rotor correspond à sa position angulaire dans le stator.

On procède ensuite à une étape de transformation 11 des courants triphasés dans un repère diphasé ($i_\alpha$, $i_\beta$). Ici on transforme ces courants triphasés dans un repère diphasé tournant.

On transforme 11 les courants déphasés mesurés ($i_\alpha$, $i_\beta$) à partir des courants mesurés ($i_a$, $i_b$, $i_c$) via (1), ici avec une transformation de Park :

$$\begin{bmatrix} i_\alpha \\ i_\beta \end{bmatrix} = \sqrt{\left(\frac{2}{3}\right)} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} i_a \\ i_b \\ i_c \end{bmatrix} \qquad (1)$$

En considérant la transformation de Park pour les courants ($i_\alpha$, $i_\beta$), on obtient :

$$i_\alpha = \cos(\theta)\, i_d - \sin(\theta)\, i_q$$
$$i_\beta = \sin(\theta)\, i_d + \cos(\theta)\, i_q \qquad (2)$$

L'équation (2) peut être réécrite sous cette forme :

$$\begin{bmatrix} i_\alpha \\ i_\beta \end{bmatrix} = \begin{bmatrix} \cos(\theta) & -\sin(\theta) \\ \sin(\theta) & \cos(\theta) \end{bmatrix} \begin{bmatrix} i_d \\ i_q \end{bmatrix} \qquad (3)$$

A partir du système (3), on remarque que les courants liés au stator ($i_\alpha$, $i_\beta$) contiennent l'information de la position du rotor.

On procède alors à la définition d'une matrice de transformation $T_m$ suivante :

$$T_m = \begin{bmatrix} \cos\left(\hat{\theta} + \frac{\pi}{4}\right) & \sin\left(\hat{\theta} + \frac{\pi}{4}\right) \\ -\sin\left(\hat{\theta} + \frac{\pi}{4}\right) & \cos\left(\hat{\theta} + \frac{\pi}{4}\right) \end{bmatrix} \qquad (4)$$

Avec $\hat{\theta}$ est la position estimée décalée d'un angle de $\frac{\pi}{4}$ radians.

On procède alors à la transformation (4) des deux courants statoriques ($i_\alpha$, $i_\beta$) par la matrice de transformation $T_m$ et nous obtenons le nouveau système d'équations suivant :

$$\begin{bmatrix} i_{dm} \\ i_{qm} \end{bmatrix} = \begin{bmatrix} \cos\left(\theta + \frac{\pi}{4}\right) & \sin\left(\theta + \frac{\pi}{4}\right) \\ -\sin\left(\theta + \frac{\pi}{4}\right) & \cos\left(\theta + \frac{\pi}{4}\right) \end{bmatrix} \begin{bmatrix} i_\alpha \\ i_\beta \end{bmatrix} \qquad (5)$$

Où :

$$i_{dm} = i_\alpha \cos\left(\hat{\theta} + \frac{\pi}{4}\right) + i_\beta \sin\left(\hat{\theta} + \frac{\pi}{4}\right)$$
$$= \cos\left(\theta - \hat{\theta} - \frac{\pi}{4}\right) i_d - \sin\left(\theta - \hat{\theta} - \frac{\pi}{4}\right) i_q \qquad (6)$$

$$i_{qm} = -i_\alpha \sin\left(\hat{\theta} + \frac{\pi}{4}\right) + i_\beta \cos\left(\hat{\theta} + \frac{\pi}{4}\right)$$
$$= \sin\left(\theta - \hat{\theta} - \frac{\pi}{4}\right) i_d + \cos\left(\theta - \hat{\theta} - \frac{\pi}{4}\right) i_q \qquad (7)$$

Ces deux courants déphasés sont récrits en fonction uniquement de l'erreur d'estimation de la position ($\theta - \hat{\theta}$), ce qui explique le besoin ultérieur d'utiliser des algorithmes de poursuite pour minimiser cette séquence afin de récupérer la position $\theta$ du rotor.

On procède alors ensuite à une étape de calcul 13 de l'erreur d'estimation de la position du rotor.

Pour obtenir l'erreur d'estimation de la position du rotor $e_\theta$, nous calculons les deux différences ($i_{dm} - i_{qm}$) et ($i_{qm}$ -

$i_{dm}$) des deux équations (6) et (7) comme montré par le système d'équation suivant :

$$\begin{cases} E_{\theta_1} = i_{qm} - i_{dm} + i_d^* \sqrt{2} \\ E_{\theta_2} = i_{dm} - i_{qm} - i_d^* \sqrt{2} \end{cases} \tag{8}$$

Où $i_d^*$ est le courant de référence de l'axe d.

Ainsi on détermine deux nouveaux termes d'erreur d'estimation de la position, que nous appellerons par la suite variables intermédiaires de l'erreur d'estimation $E_{\theta_i}$, ou plus simplement variable intermédiaires $E_{\theta_i}$, en fonction de la différence entre les deux courants du repère tournant et du courant i*d de référence.

Ensuite, nous écrivons $E_{\theta_i}$, pour i = [1,2] ; en fonction des courants dans le repère de Park $i_d$, $i_q$ et l'erreur d'estimation de la position $e_\theta$, comme suit :

$$\begin{cases} E_{\theta_1} = i_q \sqrt{2} \sin(e_\theta) - i_d \sqrt{2} \cos(e_\theta) + i_d^* \sqrt{2} \\ E_{\theta_2} = -i_q \sqrt{2} \sin(e_\theta) + i_d \sqrt{2} \cos(e_\theta) - i_d^* \sqrt{2} \end{cases} \tag{9}$$

Comme les variables intermédiaires $E_{\theta_i}$ peuvent être calculées à partir des courant mesurés, et en supposant que la commande assure le suivie du courant $i_d$ vers sa référence $i_d^*$ , nous obtenons :

$$\begin{cases} E_{\theta_1} = i_q \sqrt{2} \sin(e_\theta) + i_d^* \sqrt{2}[1 - \cos(e_\theta)] \\ E_{\theta_2} = -i_q \sqrt{2} \sin(e_\theta) - i_d^* \sqrt{2}[1 - \cos(e_\theta)] \end{cases} \tag{10}$$

Et par l'utilisation des règles trigonométriques, l'équation (10) peut être réécrite sous la forme suivante :

$$\begin{cases} E_{\theta_1} = i_q \sqrt{2} \sin(e_\theta) + i_d^* \sqrt{2}\left[2\left(\sin\left(\frac{e_\theta}{2}\right)\right)^2\right] \\ E_{\theta_2} = -i_q \sqrt{2} \sin(e_\theta) - i_d^* \sqrt{2}\left[2\left(\sin\left(\frac{e_\theta}{2}\right)\right)^2\right] \end{cases} \tag{11}$$

Donc, les variables intermédiaires $E_{\theta_i}$ peuvent-être approximées en fonction de l'erreur d'estimation de la position, de la manière suivante :

$$\begin{cases} E_{\theta_1} \approx i_q \sqrt{2}(e_\theta) + \frac{i_d^*}{\sqrt{2}}(e_\theta^2) \\ E_{\theta_2} \approx -i_q \sqrt{2}(e_\theta) - \frac{i_d^*}{\sqrt{2}}(e_\theta^2) \end{cases} \tag{12}$$

En considérant que le terme en quadratique est beaucoup plus petit par rapport au terme linéaire, $E_{\theta_i}$ peut-être réécrit sous la forme suivante :

$$\begin{cases} E_{\theta_1} \approx i_q \sqrt{2}\, e_\theta \\ E_{\theta_2} \approx -i_q \sqrt{2}\, e_\theta \end{cases} \qquad (13)$$

Il est clair que le couple électromagnétique et le courant $i_q$ ont des comportements similaires. Dans le cas où le couple est positif, le courant $i_q$ sera positif, autrement, le courant $i_q$ sera négatif.

$$\begin{cases} E_{\theta_1} \approx \lambda\, e_\theta \quad = (i_{qm} - i_{dm} + i_d^*\sqrt{2}) \; si \; i_q \; \geq 0 \\ E_{\theta_2} \approx -\lambda\, e_\theta = (i_{dm} - i_{qm} + i_d^*\sqrt{2}) \; si \; i_q \; < 0 \end{cases} \qquad (14)$$

Avec $\lambda = i_q \sqrt{2}$,

Nous remarquons donc que les variables intermédiaires d'estimation de la position $E_{\theta_i}$ ne sont plus dépendantes que de l'erreur d'estimation de la position $e_\theta$ et du courant $i_q$.

Donc le signe des variables intermédiaires $E_{\theta_i}$ ne dépend que des signes de $e_\theta$ et de $i_q$.

Pour que le signe dépende uniquement de $e_\theta$, nous définissons la première variable intermédiaire $E_{\theta_1}$ pour les valeurs de $i_q$ positives et la deuxième variable intermédiaire $E_{\theta_2}$ pour les valeurs de $i_q$ négatives. Par conséquent, les signes des variables intermédiaires $E_{\theta_1}$ et $E_{\theta_2}$ dépendent uniquement de l'erreur d'estimation de la position $e_\theta$ ($\theta - \hat{\theta}$).

$$\begin{cases} sign(E_{\theta_1}) = sign(e_\theta) = sign(i_{qm} - i_{dm} + i_d^*\sqrt{2}) \; si \; i_q \; \geq 0 \\ sign(E_{\theta_2}) = sign(e_\theta) = sign(i_{dm} - i_{qm} + i_d^*\sqrt{2}) \; si \; i_q \; < 0 \end{cases} \qquad (15)$$

Nous pouvons constater que l'erreur d'estimation de position (15) est obtenue indépendamment des paramètres de la machine sans injection des signaux à haute fréquence ni l'utilisation du filtrage.

Cependant, l'erreur d'estimation de la position $e_\theta$ n'est pas disponible pour la mesure, ce qui rend sa mise en œuvre pas possible. En revanche, les variables $E_{\theta_1}$ et $E_{\theta_2}$ introduites dans l'équation (8) sont disponibles à travers les mesures des courants. L'erreur d'estimation de la position $e_\theta$ utilisée dans l'observateur est ainsi remplacée par $\dfrac{E_{\theta_1}}{\lambda}$ pour $i_q \geq 0$ et par $\dfrac{E_{\theta_2}}{\lambda}$ pour $i_q < 0$ en vue de l'implémentation de l'observateur, et un détecteur de signe du courant est utilisé pour permuter entre ces deux variables ($E_{\theta_1}$ et $E_{\theta_2}$).

Pour éviter l'utilisation du modèle mécanique (et donc les paramètres mécaniques de la machine), nous proposons d'utiliser le modèle virtuel (15)-(16) -(17) pour l'estimation de la position, la vitesse et l'accélération de la machine :

$$\dot{\theta} = \omega \quad (15)$$

$$\dot{\omega} = \alpha \quad (16)$$

$$\dot{\alpha} = 0 \quad (17)$$

L'observateur proposé dans ce mode de réalisation selon les équations ((18)-(19)-(20)) est de type mode glissant.

Il permet d'estimer la position et la vitesse de la machine synchrone à aimant permanent.

Pour diminuer les écarts d'estimation dans les phases transitoires, l'observateur mis en œuvre estime également l'accélération de la machine, mais ceci n'est pas indispensable pour la mise en œuvre de l'invention.

Cet observateur prend comme entrées : les variables intermédiaires $E_{\theta_i}$ pour $i=1,2$ (obtenues par les mesures des courants données par l'équation (8)) devisées par λ.

Cet observateur est réglé par un gain adaptatif, de sorte qu'un seul paramètre est utilisé pour son réglage.

$$\dot{\hat{\theta}} = \widehat{\omega} + K_1 \left|\frac{E_{\theta_i}}{\lambda}\right|^{\frac{2}{3}} sign(\frac{E_{\theta_i}}{\lambda}) \qquad (18)$$

$$\dot{\hat{\omega}} = \hat{\alpha} + K_2 \left|\frac{E_{\theta_i}}{\lambda}\right|^{\frac{1}{3}} sign(\frac{E_{\theta_i}}{\lambda}) \qquad (19)$$

$$\dot{\hat{\alpha}} = K_3 sign(\frac{E_{\theta_i}}{\lambda}) \qquad (20)$$

Avec $K_1 = 3L$, $K_2 = 2L^2$, $K_2 = \left(\frac{2}{3}\right)^2 L^3$ et $E_{\theta_i} = \begin{cases} E_{\theta_1} \ si \ i_q \ \geq 0 \\ E_{\theta_2} \ si \ i_q \ < 0 \end{cases}$.

Où L est une constante positive.

Les 3 gains de l'observateur sont ainsi réglés à l'aide du paramètre L.

Des mesures expérimentales montrent les performances de la présente invention.

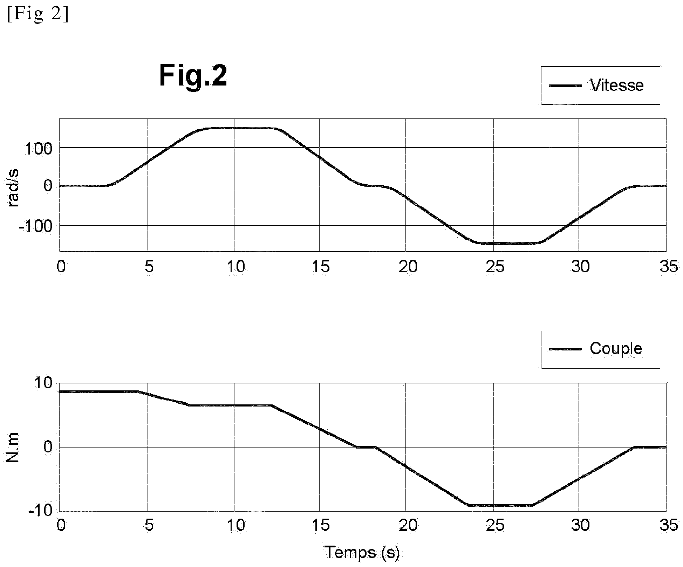

La figure 2 montre les profils de vitesse et de couple de charge utilisés pour valider cette invention. Les profils choisis permettent de valider l'invention sur les différentes gammes de vitesse avec différentes valeurs de couples (positifs et négatifs).

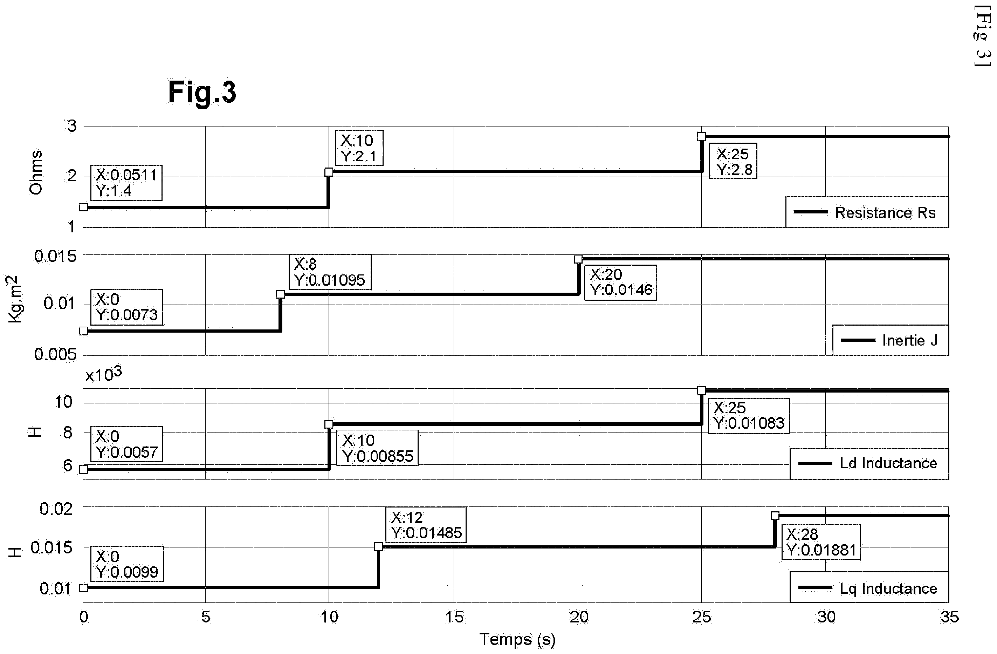

La figure 3 montre les dynamiques des paramètres proposées pour valider les inventions. Nous avons introduit des variations pour la résistance, les inductances et l'inertie de la machine pour prouver que l'estimation de la position et de la vitesse est indépendante des paramètres électriques et mécaniques de la machine.

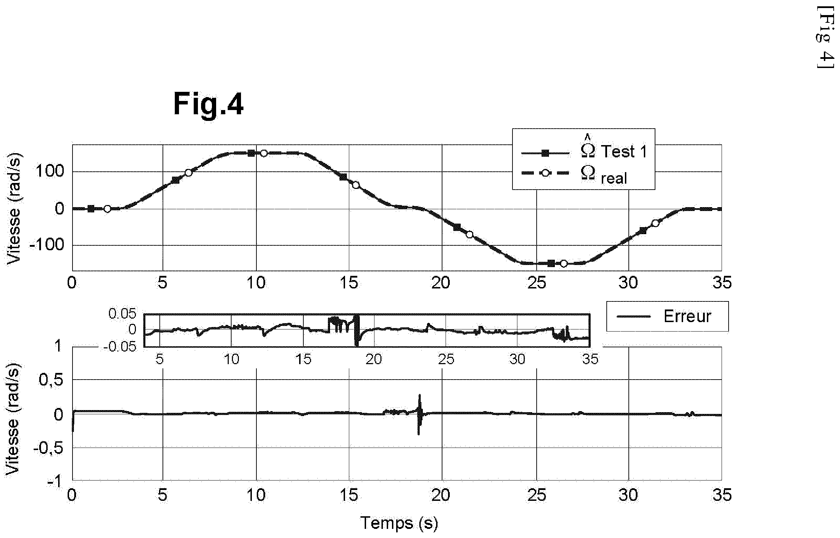

La figure 4 montre les vitesses estimées est mesurée (partie haute) et l'erreur d'estimation (partie basse).

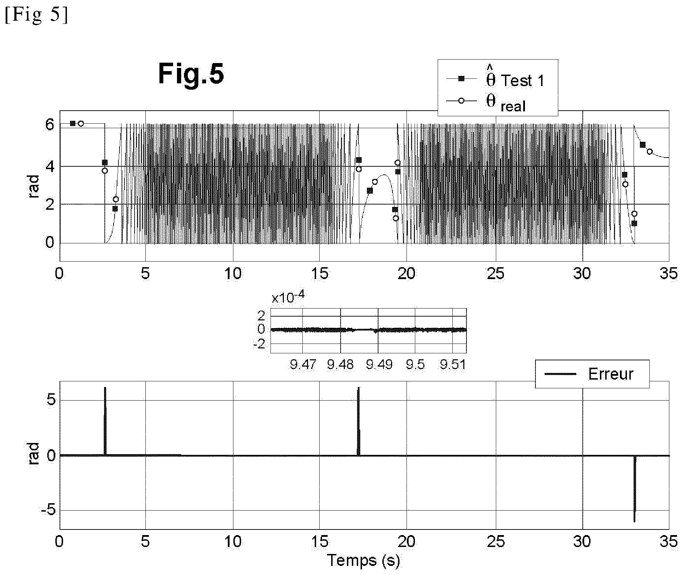

Enfin, la figure 5 montre les positions estimées est mesurée (partie haute) et l'erreur d'estimation de la position (partie basse).

On remarque de cette expérimentation que la technique proposée permet de donner une estimation relativement précise de la position et de la vitesse de la machine synchrone à aimant permanent.

En outre cette estimation n'est pas affectée par les variations des paramètres électriques et mécaniques de la machine.

La technique permet également une estimation robuste et précise à très basse vitesse, cela qui permet de surmonter les problèmes d'observabilité liée au modèle de la machine.

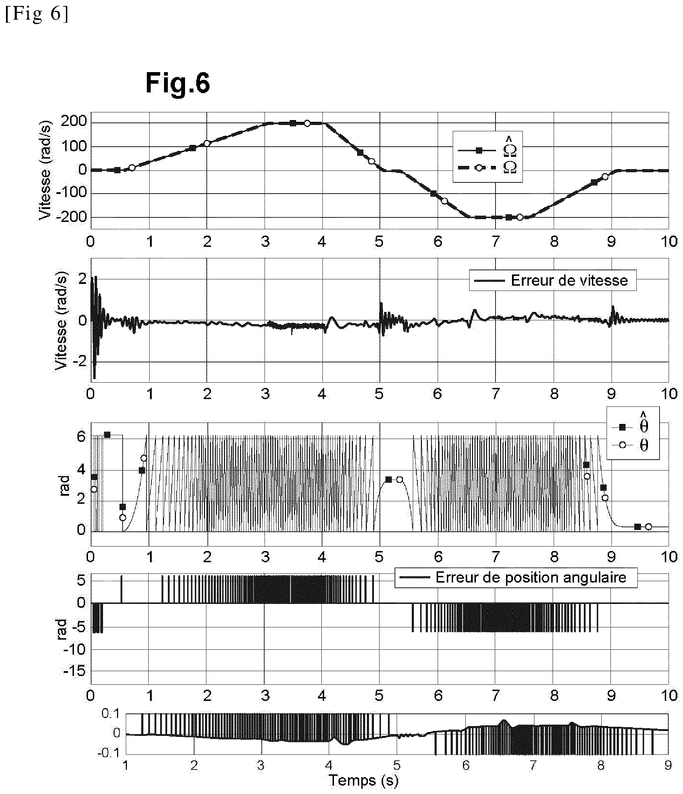

Afin de comparer les performances de la méthode proposée avec celle utilisant l'injection des signaux à haute fréquence, un autre test est réalisé dans les mêmes conditions. Nous remarquons, en référence à la figure 6, que la méthode basée sur l'injection génère un écart d'estimation de la position dû aux filtrages. De plus, l'estimation est particulièrement bruitée, ce qui est dû à l'injection des signaux à haute fréquence.

**Revendications**

1. Procédé (1) d'estimation de la position et de la vitesse du rotor d'une machine électrique synchrone à rotor à aimant permanent comprenant :

    - Une étape de mesure (10) des courants triphasés ($i_a$, $i_b$, $i_c$) de ladite machine électrique ;
    - Une étape de transformation (11) desdits courants triphasés mesurés dans un repère tournant diphasé, comprenant une composante directe et une composante en quadrature ;
    - Une étape de définition (13) de deux variables intermédiaires de l'erreur d'estimation de la position du rotor en fonction des valeurs du courant transformé dans ledit repère diphasé ;

    **caractérisé en ce que** le procédé comprend :

    - Une étape de définition (14) d'un observateur pour déterminer ladite position et vitesse du rotor en fonction des deux variables intermédiaires de l'erreur d'estimation et de la valeur des courants transformés, et du signe de la composante en quadrature du courant diphasé.

2. Procédé (1) selon la revendication 1 **caractérisé en ce que** ladite étape de transformation met en œuvre une transformée de Park.

3. Procédé (1) selon la revendication 1 ou 2, **caractérisé en ce que** ledit observateur est un observateur à mode glissant.

4. Procédé (1) selon la revendication 3, **caractérisé en ce que** ledit observateur permet en outre une estimation de l'accélération de la machine électrique.

5. Procédé (1) selon la revendication 3 ou 4, **caractérisé en ce que** l'observateur calcule la position et la vitesse du rotor en fonction de la première ou de la deuxième variable intermédiaire, sélectionnée en fonction du signe de la composante en quadrature du courant diphasé.

6. Dispositif d'estimation de la position et de la vitesse du rotor d'une machine électrique synchrone à rotor à aimant permanent comprenant :

   - Des moyens de mesure des courants triphasés ($i_a$, $i_b$, $i_c$) de ladite machine électrique ;
   - Des moyens de transformation desdits courants triphasés mesurés dans un repère tournant diphasé, comprenant une composante directe et une composante en quadrature ;
   - Des moyens de définition de deux variables intermédiaires de l'erreur d'estimation de la position du rotor en fonction des valeurs du courant transformé dans ledit repère diphasé ;

   **caractérisé en ce que** le dispositif comprend :

   - Des moyens de définition d'un observateur pour déterminer ladite position et vitesse du rotor en fonction des deux variables intermédiaires de l'erreur d'estimation et de la valeur des courants transformés, et du signe de la composante en quadrature du courant diphasé.

7. Ensemble électrique comprenant une machine électrique synchrone à rotor à aimant permanent et un dispositif d'estimation selon la revendication 6.

8. Véhicule automobile comprenant un ensemble électrique selon la revendication 7.


**Patentansprüche**

1. Verfahren (1) zur Schätzung der Position und der Geschwindigkeit des Rotors einer elektrischen Synchronmaschine mit Rotor mit Permanentmagnet, umfassend:

   - Einen Schritt des Messens (10) der Dreiphasenströme ($i_a$, $i_b$, $i_c$) der elektrischen Maschine;
   - Einen Schritt des Transformierens (11) der gemessenen Dreiphasenströme in ein rotierendes Zweiphasenbezugssystem, umfassend eine direkte Komponente und eine Quadraturkomponente;
   - Einen Schritt des Definierens (13) von zwei Zwischenvariablen des Schätzfehlers der Position des Rotors in Abhängigkeit von den Werten des transformierten Stroms in dem Zweiphasenbezugssystem;

   **dadurch gekennzeichnet, dass** das Verfahren umfasst:

   - Einen Schritt des Definierens (14) eines Beobachters, um die Position und Geschwindigkeit des Rotors in Abhängigkeit von den beiden Zwischenvariablen des Schätzfehlers und von dem Wert der transformierten Ströme und von dem Vorzeichen der Quadraturkomponente des Zweiphasenstroms zu ermitteln.

2. Verfahren (1) nach Anspruch 1, **dadurch gekennzeichnet, dass** der Schritt des Transformierens eine Park-Transformation einsetzt.

3. Verfahren (1) nach Anspruch 1 oder 2, **dadurch gekennzeichnet, dass** der Beobachter ein Gleitmodus-Beobachter ist.

4. Verfahren (1) nach Anspruch 3, **dadurch gekennzeichnet, dass** der Beobachter ferner eine Schätzung der Beschleunigung der elektrischen Maschine ermöglicht.

5. Verfahren (1) nach Anspruch 3 oder 4, **dadurch gekennzeichnet, dass** der Beobachter die Position und die Geschwindigkeit des Rotors in Abhängigkeit von der ersten oder der zweiten Zwischenvariable berechnet, die in Abhängigkeit vom Vorzeichen der Quadraturkomponente des Zweiphasenstroms ausgewählt wird.

**6.** Vorrichtung zur Schätzung der Position und der Geschwindigkeit des Rotors einer elektrischen Synchronmaschine mit Rotor mit Permanentmagnet, umfassend:

- Mittel zum Messen der Dreiphasenströme ($i_a$, $i_b$, $i_c$) der elektrischen Maschine;
- Mittel zum Transformieren der gemessenen Dreiphasenströme in ein rotierendes Zweiphasenbezugssystem, umfassend eine direkte Komponente und eine Quadraturkomponente;
- Mittel zum Definieren von zwei Zwischenvariablen des Schätzfehlers der Position des Rotors in Abhängigkeit von den Werten des transformierten Stroms in dem Zweiphasenbezugssystem;

**dadurch gekennzeichnet, dass** die Vorrichtung umfasst:

- Mittel zum Definieren eines Beobachters, um die Position und Geschwindigkeit des Rotors in Abhängigkeit von den beiden Zwischenvariablen des Schätzfehlers und von dem Wert der transformierten Ströme und von dem Vorzeichen der Quadraturkomponente des Zweiphasenstroms zu ermitteln.

**7.** Elektrische Anordnung, umfassend eine elektrische Synchronmaschine mit Rotor mit Permanentmagnet und eine Vorrichtung zur Schätzung nach Anspruch 6.

**8.** Kraftfahrzeug, das eine elektrische Anordnung nach Anspruch 7 umfasst.

**Claims**

**1.** Method (1) for estimating the position and the speed of the rotor of a permanent-magnet rotor synchronous electric machine, comprising:

- a step (10) of measuring the three-phase currents ($i_a$, $i_b$, $i_c$) of said electric machine;
- a step (11) of transforming said measured three-phase currents into a two-phase rotating reference frame, comprising a direct component and a quadrature component;
- a step (13) of defining two intermediate variables of the error in estimating the position of the rotor depending on the values of the current which is transformed into said two-phase reference frame;

**characterized in that** the method comprises:

- a step (14) of defining an observer to determine said position and speed of the rotor depending on the two intermediate variables of the estimation error and the value of the transformed currents, and the sign of the quadrature component of the two-phase current.

**2.** Method (1) according to Claim 1, **characterized in that** said transformation step implements a Park transformation.

**3.** Method (1) according to Claim 1 or 2, **characterized in that** said observer is a sliding-mode observer.

**4.** Method (1) according to Claim 3, **characterized in that** said observer furthermore makes it possible to estimate the acceleration of the electric machine.

**5.** Method (1) according to Claim 3 or 4, **characterized in that** the observer calculates the position and the speed of the rotor depending on the first or second intermediate variable, selected depending on the sign of the quadrature component of the two-phase current.

**6.** Device for estimating the position and the speed of the rotor of a permanent-magnet rotor synchronous electric machine, comprising:

- means for measuring the three-phase currents ($i_a$, $i_b$, $i_c$) of said electric machine;
- means for transforming said measured three-phase currents into a two-phase rotating reference frame, comprising a direct component and a quadrature component;

- means for defining two intermediate variables of the error in estimating the position of the rotor depending on the values of the current which is transformed into said two-phase reference frame;

**characterized in that** the device comprises:

- means for defining an observer to determine said position and speed of the rotor depending on the two intermediate variables of the estimation error and the value of the transformed currents, and the sign of the quadrature component of the two-phase current.

7. Electrical assembly comprising a permanent-magnet rotor synchronous electric machine and an estimation device according to Claim 6.

8. Motor vehicle comprising an electrical assembly according to Claim 7.

[Fig 1]

[Fig 2]

Fig.2

Fig.3

[Fig 3]

EP 4 416 835 B1

EP 4 416 835 B1

[Fig 4]

Fig.4

14

[Fig 5]

Fig.5

[Fig 6]

Fig.6

**EP 4 416 835 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018131305 A1